**Europäisches Patentamt**

(19) **European Patent Office**

**Office européen des brevets**

(11) Numéro de publication: **0 125 158**
**A1**

(12) # DEMANDE DE BREVET EUROPEEN

(21) Numéro de dépôt: **84400699.9**

(51) Int. Cl.³: **F 16 L 3/12**

(22) Date de dépôt: **09.04.84**

(30) Priorité: **09.05.83 ES 272094 U**

(43) Date de publication de la demande:
**14.11.84 Bulletin 84/46**

(84) Etats contractants désignés:
**AT BE CH DE FR GB IT LI NL SE**

(71) Demandeur: **APARELLAJE ELECTRICO, S.A.**
**Numancia 68**
**Barcelona(ES)**

(72) Inventeur: **Vilanova Bosch, José**
**Rocafort 244**
**Barcelone(ES)**

(74) Mandataire: **Picard, Jean-Claude Georges et al,**
**Cabinet Plasseraud 84, rue d'Amsterdam**
**F-75009 Paris(FR)**

(54) Support à collier pour conduites, câbles ou analogues.

(57) Support à collier pour conduites, câbles ou analogues, formé d'une pièce unique qui comprend: une tige (1) munie d'ailettes transversales (6, 6a) flexibles, destinée à être fixée à un mur par encastrement; un noyau central (2) traversé intérieurement par un canal à embouchure d'entrée (2a), ledit noyau présentant une paroi supérieure (9) plane, essentiellement perpendiculaire à ladite tige (1) et apte à être percutée afin d'obtenir ledit encastrement; un cliquet (4) en forme de languette dentée flexible; et un ruban flexible (3) pour attacher lesdites conduites, muni, sur une de ses faces, de dents (19, 19a) transversales, ruban apte à passer par ledit canal intérieur dudit noyau central (2), pouvant être bloqué par ledit cliquet (4) et émergeant de ladite paroi supérieure (9) par un tronçon courbe (17).

Fig. 4.

EP 0 125 158 A1

1

SUPPORT A COLLIER POUR CONDUITES, CABLES OU
ANALOGUES.

L'invention concerne un support à collier pour
conduites, câbles ou analogues, conçu pour l'installation de conduites sur des murs, support qui permet de
réaliser, d'une part leur ancrage dans le mur, et d'autre
part la fixation d'une ou de plusieurs conduites, telles
que tubes divers et conducteurs électriques, afin de les
disposer correctement et solidement.

Par rapport aux autres articles similaires déjà
connus, ce support présente d'autres particularités qui
permettent d'obtenir un montage plus facile et plus
rapide, ainsi qu'une meilleure installation des conducteurs ou des tubes, et également des conditions mécaniques
de travail plus rationnelles. En outre, l'absence d'éléments indépendants du support fait qu'on élimine tout
risque de perte ou de détachement de ces éléments, contrairement à ce qui arrive d'habitude quand le support
et le collier se composent de plusieurs éléments pouvant
être séparés. Un autre détail particulièrement important
est l'élimination de points fragiles ou spécialement
vulnérables dans l'ensemble, de sorte qu'il ne se produit
pas de détériorations spontanées ou prématurées.

Ledit support à collier se caractérise selon
l'invention par le fait qu'il est formé d'une pièce
unique en matière synthétique obtenue par exemple par
moulage, laquelle comprend : une tige munie d'ailettes
transversales et flexibles, destinée à être fixée à un
mur par encastrement ; un noyau central essentiellement
prismatique, traversé intérieurement par un canal à
embouchure d'entrée évasée, ce noyau présentant une paroi
supérieure plane, avec un tronçon contigu à ladite embouchure en forme d'ailette flexible, ladite paroi étant
essentiellement perpendiculaire à ladite tige et apte à

2

être percutée afin d'obtenir ledit encastrement ; un cliquet en forme de languette dentée flexible, situé sur la partie du noyau central opposée à l'embouchure d'entrée ; et un ruban flexible pour attacher lesdites conduites, muni sur une de ses faces de dents transversales, apte à passer par ledit canal intérieur dudit noyau central, pouvant être bloqué par ledit cliquet et émergeant de ladite paroi supérieure grâce à un tronçon courbe, ce tronçon et l'ailette flexible étant aptes à former des flancs courbes du noyau central.

Un exemple non limitatif de réalisation de l'invention est exposé en détail dans la description ci-après, en se référant aux dessins qui l'accompagnent.

Dans ces dessins :

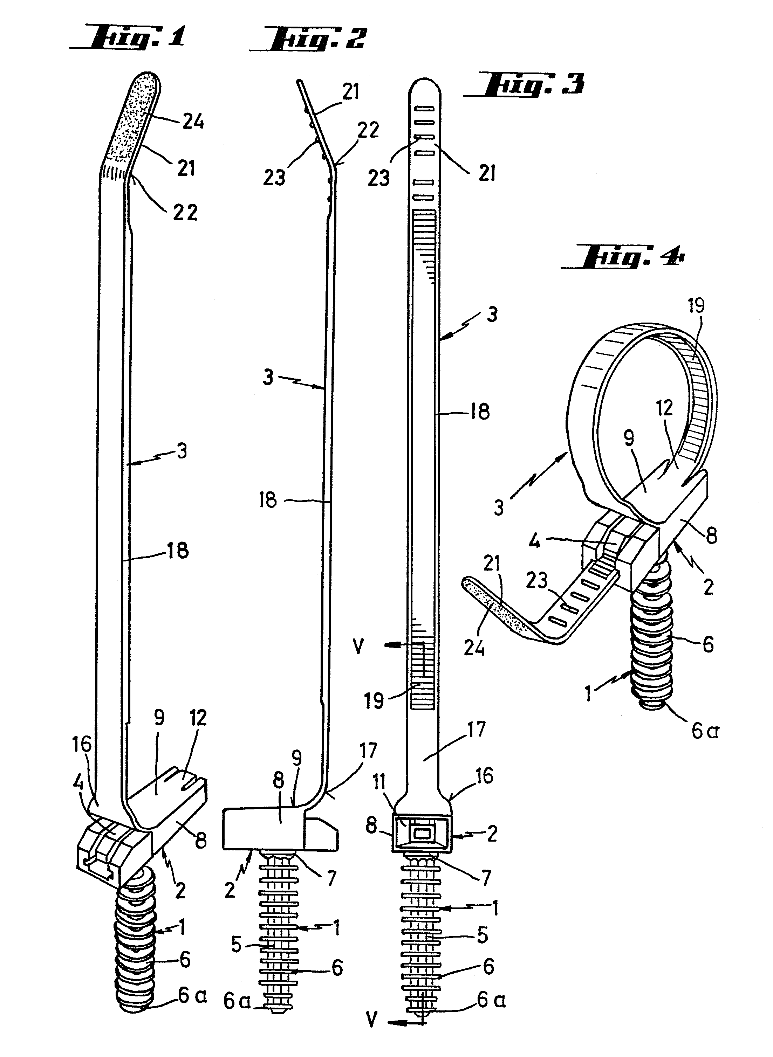

la figure 1 est une vue en perspective d'un support à collier selon l'invention ;

la figure 2 est une vue latérale du support, avec le collier en position d'extension ;

la figure 3 est une vue de face du support à collier, montrant la face intérieure du ruban, en position d'extension ;

la figure 4 est une vue en perspective du support à collier, en position fermée ;

la figure 5 est une vue en coupe partielle, agrandie, du support à collier, selon la ligne V-V de la figure 3 ;

la figure 6 est une vue en coupe, à une échelle plus petite, selon la ligne VI-VI de la figure 5 ; et

la figure 7 est une vue en coupe longitudinale de deux tronçons du ruban denté.

Le présent support à collier, par exemple en matière synthétique et réalisé en une seule pièce par moulage, comprend une tige d'ancrage 1, un noyau central 2, un ruban flexible 3 destiné à enserrer les conducteurs, conduites ou analogues, et un cliquet 4.

3

La tige 1 présente une âme 5, à section polygonale dans le présent exemple et qui est munie d'ailettes 6 flexibles et transversales, de préférence circulaires et placées à intervalles réguliers, la première ou les premières ailettes 6a de la tige présentant un diamètre inférieur à celui des autres afin d'obtenir un effet de centrage quand on enfonce la tige 1 du support dans un trou pratiqué dans un mur à cet effet. Sur la partie la plus proche du noyau central 2, l'âme 5 présente une expansion en forme de col cylindrique 7.

Le noyau central 2 est globalement en forme de parallélépipède rectangle et présente des parois latérales 8, une paroi supérieure 9 et une base 10. Les faces intérieures des parois latérales 8, au niveau de l'embouchure d'entrée 2a, forment des plans inclinés 11 qui confèrent à cette entrée une forme en entonnoir. La paroi supérieure 9, près de ladite enbouchure d'entrée 2a, forme une ailette flexible 12. Cette paroi supérieure 9 est essentiellement perpendiculaire à la tige 1.

Le noyau central 2 possède intérieurement des nervures 13 allant de l'embouchure d'entrée 2a à un cliquet 4. Ce cliquet 4 a la forme d'une languette flexible pourvue de dents 14 et d'un téton postérieur 15.

Un ruban flexible 3 part du bord supérieur et postérieur de la paroi supérieure 9 du noyau central 2 et présente à sa base un tronçon 16 plus large, duquel part un tronçon courbe 17 ; la face intérieure du ruban 3 possède deux rebords 18 entre lesquels se trouvent des dents transversales 19, puis des dents d'extrémité 19a progressivement tronquées, comme on le voit sur la figure 7. Dans chaque intervalle entre dents consécutives, un pan 20 qui peut être plan ou arrondi empêche la formation de fissures, comme il s'en produit d'ordinaire lorsque les dents forment un angle aigu. Les dents 19 et 19a ont un profil angulaire avec un côté antérieur

4

oblique et un côté postérieur essentiellement perpendiculaire au ruban.

Le tronçon terminal 21 du ruban 3 forme un coude muni, sur la face qui présente les dents 19, de reliefs antidérapants 23 permettant de le saisir, et d'une surface rugueuse 24 sur l'autre face, le tout en vue de faciliter la manipulation.

Le présent support à collier est utilisé de la façon suivante. L'installation est réalisée en pratiquant sur le mur, la cloison ou le plafond correspondants un trou cylindrique d'un diamètre légèrement inférieur à celui des ailettes circulaires 6 de la tige 1, après quoi la tige est positionnée, avec centrage par les ailettes 6a, et introduite dans le trou par une percussion exercée, par exemple avec un marteau, contre la face plane de la paroi supérieure 9 du noyau central 2.

Une fois la tige 1 fixée au mur, le collier est prêt pour la fixation d'un faisceau de conduites ou de tubes, qui sont mis en place en utilisant comme assise la paroi 9 en collaboration avec l'ailette 12 et avec le tronçon courbe 17 du ruban 3, formant ensemble un berceau qui facilite l'appui correct desdites conduites ou analogues, en épousant leur forme arrondie.

Le serrage final des conduites, câbles ou tubes est obtenu en introduisant l'extrémité du ruban 3 à dents tronquées 19a dans le noyau central 2 par son embouchure d'entrée évasée 2a, grâce aux plans inclinés 11, le ruban, guidé par les nervures 13, étant soumis à une traction par sa partie postérieure, jusqu'à obtenir le serrage adéquat desdites conduites, tubes ou analogues. Ensuite, le ruban 3 est automatiquement bloqué par le cliquet 4 grâce à l'engrènement de ses dents 14 avec les dents 19 du ruban, à section complémentaire, dont le profil empêche tout le recul.

Dans ces conditions, le collier adopte la position

5

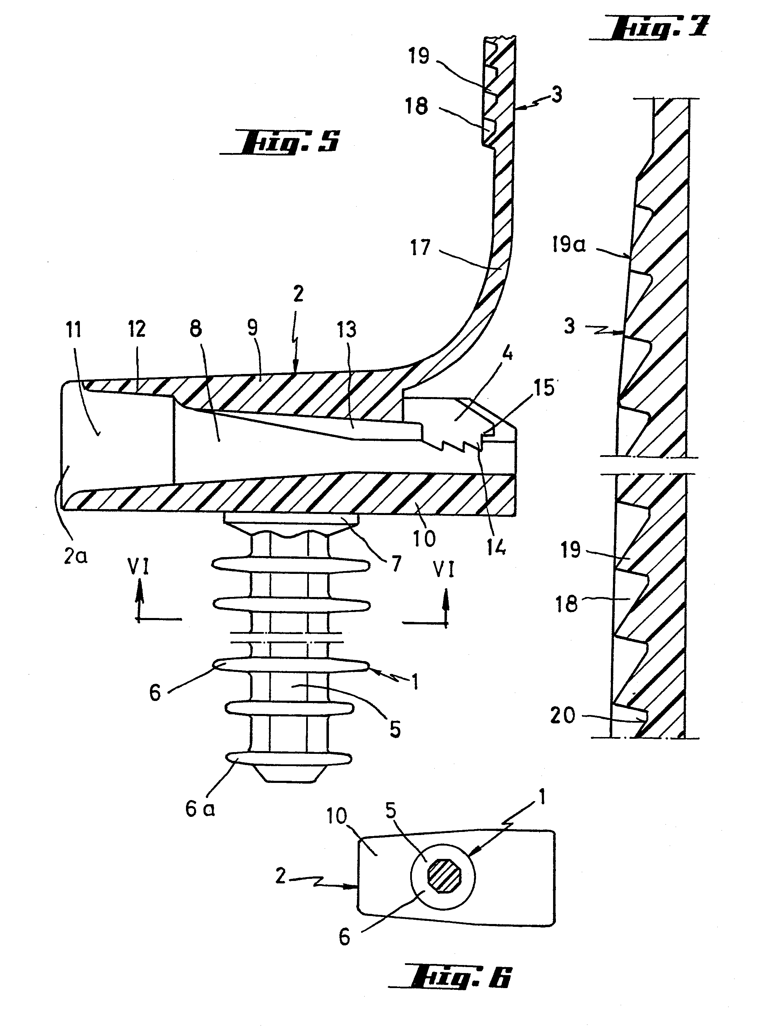

indiquée sur la figure 4, sur laquelle le ruban 3 est représenté en position annulaire.

Une particularité du cliquet 4 réside dans le fait que son téton postérieur 15 permet, d'une part de réaliser un éventuel jeu de levier depuis l'extérieur pour soulever et désaccoupler le cliquet lui-même par rapport au ruban 3, et d'autre part d'obtenir un appui supplémentaire sur la denture dudit ruban 3 dans le cas d'un serrage trop tendu qui pourrait mettre en danger de rupture l'un des éléments accouplés.

6

<u>REVENDICATIONS</u>

1. Support à collier pour conduites, câbles et analogues, caractérisé par le fait qu'il est formé d'une pièce unique, notamment en matière synthétique, réalisée par moulage, support qui comprend : une tige (1) munie d'ailettes (6,6a) transversales et flexibles, destinée à être fixée à un mur par encastrement ; un noyau central (2) essentiellement prismatique, traversé intérieurement par un canal à embouchure d'entrée (2a) évasée, ce noyau présentant une paroi supérieure (9) plane, avec un tronçon, contigu à ladite embouchure (2a), en forme d'ailette flexible (12), ladite paroi (9) étant essentiellement perpendiculaire à ladite tige (1) et apte à être percutée afin d'obtenir ledit encastrement ; un cliquet (4) en forme de languette dentée flexible, situé sur la partie du noyau central (2) opposée à l'embouchure d'entrée (2a) ; et un ruban flexible (3) pour attacher lesdites conduites ou analogues, muni sur une de ses faces de dents (19,19a) transversales, apte à passer par ledit canal intérieur dudit noyau central (2), pouvant être bloqué par ledit cliquet (4) et émergeant de ladite paroi supérieure (9) par un tronçon courbe (17), ce tronçon (17) et ladite ailette flexible (12) étant aptes à former des flancs courbés du noyau central.

2. Support selon la revendication 1, caractérisé par le fait que les dents (19, 19a) transversales du ruban flexible (3) situées entre deux rebords (18), ont un profil angulaire avec un côté antérieur oblique et un côté postérieur essentiellement perpendiculaire au ruban, les premières dents (19a), proches de l'extrémité libre du ruban, étant tronquées, alors que chaque dent est séparée de la suivante par un espace (20) intermédiaire.

3. Support selon la revendication 1 ou 2, caractérisé par le fait que le ruban flexible (3) présente, sur son extrémité terminale (21), un tronçon coudé (22) permettant de le saisir, avec une face munie de reliefs (23) antidérapants, la face opposée possédant une surface (24) rugueuse.

4. Support selon l'une quelconque des revendications précédentes, caractérisé par le fait que la languette du cliquet (4) possède un téton postérieur (15) permettant de réaliser, éventuellement, un effet de levier pour obtenir le désaccouplement.

5. Support selon l'une quelconque des revendications précédentes, caractérisé par le fait que le tronçon de tige contigu au noyau central (2) possède un col cylindrique (7) dont la section est plus grande que celle du reste de la tige (1).

6. Support selon l'une quelconque des revendications précédentes, caractérisé par le fait qu'au moins une ailette (6a) de l'extrémité de la tige (1) présente un diamètre inférieur à celui des autres ailettes (6).

0125158

**Fig. 1**

**Fig. 2**

**Fig. 3**

**Fig. 4**

Fig. 5

Fig. 6

Fig. 7

Office européen
des brevets

**RAPPORT DE RECHERCHE EUROPEENNE**

**0125158**
Numéro de la demande

EP 84 40 0699

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl ³) |
|---|---|---|---|
| A | FR-A-1 315 098 (M.A. MONNIER)<br><br>* Figures 1-3 * | 1-3,5,6 | F 16 L 3/12 |
| A | FR-A-1 575 198 (ILLINOIS TOOL WORKS INC.)<br>* Figures 1-4 * | 1,3 | |
| A | US-A-3 542 321 (R.D. KAHABKA)<br>* Figure 8 * | 1-4 | |
| A | US-A-3 942 750 (NOORILY)<br>* Figure 9 * | 1,3 | |
| A | BE-A- 557 389 (K. WROBEL et al.)<br>* Figures 1-17 * | 1-3 | |
| A | Dépliant de la société INDUSTRIE EN HANDELSONDERNEMING "EMERGO" N.V. de Landsmeer, NL, publié en octobre 1962 (section S, page 2) voir première série de figures | 1,5,6 | **DOMAINES TECHNIQUES RECHERCHES (Int. Cl. ³)**<br><br>F 16 L |

Le présent rapport de recherche a été établi pour toutes les revendications

| Lieu de la recherche | Date d'achèvement de la recherche | Examinateur |
|---|---|---|
| LA HAYE | 12-07-1984 | ANGIUS P. |